# EUROPEAN PATENT SPECIFICATION

(11) **EP 1 974 168 B1**
(45) Date of publication and mention of the grant of the patent: **26.11.2014**
(21) Application number: 07700305.1
(22) Date of filing: 26.01.2007
(51) Int. Cl.: F24J 3/08, F25B 30/06, F16L 9/19

(54) **PIPE AND SYSTEM FOR UTILIZING LOW-ENERGY**
ROHR UND SYSTEM ZUR VERWENDUNG VON GERINGER ENERGIE
TUYAUTERIE ET SYSTEME POUR UTILISATION BASSE ENERGIE

(30) Priority: 27.01.2006 FI 20065058; 31.08.2006 FI 20065539
(43) Date of publication of application: 01.10.2008
(73) Proprietor: Mateve OY, 65280 Vaasa (FI)
(72) Inventor: PANULA, Erkki-Jussi, FI-60200 Seinäjoki (FI); LIESKOSKI, Mauri, FI-65280 Vaasa (FI)
(74) Representative: Kolster Oy Ab
(86) International application number: PCT/FI2007/050040
(87) International publication number: WO 2007/085700

(56) References cited:
- WO-A2-2006/096833
- CH-A5- 649 623
- DE-A1- 3 139 868
- FR-A1- 2 820 813
- JP-A- 57 000 454
- JP-A- 57 000 454
- JP-A- 59 157 442
- US-A- 5 339 890

## Description

### BACKGROUND OF THE INVENTION

The invention relates to utilizing low energy, and particularly to a system in which thermal energy is transferred with a terminal, such as a heat pump, from the ground, rock or water via a mediating fluid.

Low energy means here a low temperature of a heat source, which may be for instance +2 to +10 degrees. In this description, the ground heat provided by a heat source, such as the ground, rock or water, will be referred to as low energy. Utilization of the low energy of the ground, rock or water has usually been heating of a building or service water by means of, for example, a heat pump or a thermal collection circuit. The operating principle of such a ground heat system corresponds to that of a freezer but is inverse, whereby the system cools the ground and heats a water accumulator, for instance. Frequently, 2 to 4 units of heat are obtained per one electric energy unit used. The coefficient of utilization is remarkably better than in direct electric heating. In cold climates, the heating energy consumption of real estates is considerably high. Utilizing ground heat becomes more and more profitable as the costs of electricity and oil increase.

This kind of low-energy system can also alternatively be utilized for cooling interiors, for instance by circulating mediating fluid from the ground via cooling bars or the like.

One common way of recovering heat is a pipe system positioned horizontally at a depth of about 1 meter. However, such a pipe system requires a large area, whereby it can only be used in large sites. The collection circuit may be in the ground or in water. Positioning a horizontal pipe system in the ground requires digging a pipe trench for the whole area of the collection circuit. The pipe loops of the circuit must be at a distance of at least 1.5 m from each other, so that the adjacent loops do not impede each other's heat recovery. Positioning a horizontal pipe in a park, for example, is difficult without damaging roots of plants and trees.

A second common way of recovering heat is a heat well. Here, a pipe system is embedded in a hole bored in rock. A heat well, i.e. a bore well, is usually bored in the vertical direction. Compared with a horizontal pipe system, a very small area is required for a heat well. However, there may be a considerable layer of overburden of dozens of metres upon the rock. The portion of the overburden must be provided with a protecting pipe, which increases the costs. Thus, the soil having a thick layer of overburden restricts the positioning of a heat well. The heat yield is usually greater in a heat well than in a horizontal pipe system. The heat yield from a heat well depends partly on the flow of ground water. It is, however, impossible to estimate the flow of groundwater without implementing expensive boring.

A third common way of heat recovery is to position a heat recovery pipe system on the bottom of a lake or another waterway, whereby heat is transferred from the bottom sediment and water to the mediating solution. A pipe can be taken to water in the ground but in such a case there must be separate pits for supply and return pipes. It is easy to install a water-positioned pipe system on the bottom of a waterway. A solution-filled pipe is, however, lighter than water, whereby it tends to rise upwards. The risen pipe portions may cause air pockets impeding the circulation. Thus, the pipe must be anchored onto the bottom with a sufficient number of weights. A pipe system positioned on the bottom is also susceptible to breaking. An anchor of a boat or the like may stick to the pipe system and break a pipe. At the water edge, the supply and return pipes must be dug into the bottom so that the ice will not break the pipe system.

Selection between these three ways depends, however, on the location, surface area and soil of the area that can be used. Low-energy networks have been designed to be implemented in such a way that several houses share one greater thermal collection circuit. A publication JP 57 000454 A discloses a heat exchanger comprising a pipe according to the preamble of claim 1.

Another publication US 5,339,890 discloses a ground source heat pump system wherein a subterranean piping installation is constructed of an external tube and an insulated internal tube arranged concentrically within the external pipe.

### BRIEF DESCRIPTION OF THE INVENTION

An object of the invention is thus to provide a pipe and a system in such a way that above problems can be solved. The object of the invention is achieved with a pipe and a system that are characterized in what is stated in the independent claims 1 and 6. The preferred embodiments of the invention are disclosed in the dependent claims.

The invention is based on the idea that the receiving circuit of low energy, such as a ground circuit of a ground heat pump, is implemented with a pipe, the outer periphery of which has recess portions extending inwards. The outer end of the pipe is closed, whereby the solution may, depending on the flowing direction, move at the end of the pipe from the inner pipe portion to the outer pipe portion or vice versa. The inner and outer pipe portion may be provided with two separate pipes or with one pipe, in which the outer pipe is formed around the inner pipe.

One object of the invention is to provide a system for implementing a receiving circuit of low energy of a terminal.

Another object of the invention is to provide a pipe for implementing a receiving circuit of low energy of a terminal.

In accordance with an embodiment of one object of the invention, the system comprises a terminal and a ground circuit, wherein heat bound to the mediating fluid circulating in the circuit is conveyed with a ground heat pump for example to a heating circuit of a real estate. The ground circuit is implemented with an inner pipe and with an outer pipe surrounding it in such a way that the outer end of the outer pipe is closed, whereby the solution may, depending on the flowing direction, move at the end of the pipe from the inner pipe to the outer pipe and vice versa.

The ground circuit of the system may be positioned horizontally by, for instance, digging it into a trench. The pipe according to the invention allows the circuit to be implemented without a separate return pipe. The length of the trench dug for the ground circuit decreases depending on the area of the outer surface of the outer pipe.

The pipe may be positioned in the ground downwards from the horizontal plane by boring slantingly. The boring may also be implemented not only on rock but also between rock and the ground surface with a ground auger because no separate pit is needed for the return pipe of the circuit. The pipe according to the invention enables the positioning of the pipe under a waterway, where the pipe is protected. The hole for the pipe being bored obliquely downwards, the outer end of the pipe can be positioned deeper, where the temperature is also higher. Slanting the pipe downwards allows air to discharge from the pipe system. Slanting of the pipe may be varied according to the soil. The pipe needs not be straight but it can be turned and bent in a way enabled by the ground boring. The pipe according to the invention allows a ground circuit to be implemented under waterways, parks, roads or even buildings because no separate return pipe is needed.

In accordance with a second embodiment, the ground circuit comprises a main pipe system connected to a terminal, two or more said pipes having an inner pipe and an outer pipe being joined to the main pipe system. The main pipe system may be implemented as a separate system but in such a case heat transfer must be minimized by separating the pipes from each other or by insulating the main pipe conveying heated mediating fluid. The number and length of the pipes may be varied according to the area and soil to be used. It is to be noted that not only a pipe according to the invention but also ground circuits implemented in conventional ways can be joined to the main pipe system.

In accordance with an embodiment of a second object of the invention, mediating medium is conveyed away from the heat pump in the inner pipe of a pipe comprising an outer pipe and an inner pipe inside it, and mediating fluid heated by ground heat is received to the heat pump from the space between the outer surface of the inner pipe and the inner surface of the outer pipe surrounding it. In a hole bored obliquely or directly downwards, the temperature is higher at the final end of the pipe. Conveying the mediating medium as cold as possible to a lower location provides, at the end of the pipe, the greatest possible temperature difference between the mediating fluid and the substance outside the pipe, such as soil, water or filling material positioned outside the pipe. A great temperature difference enables efficient transfer of heat energy to the mediating medium.

In accordance with one embodiment of the invention, the pipe comprises an inner pipe, in the outside of which there are outer pipe portions that are separated with recess portions and form an outer pipe. The outer pipe provides, thanks to the recess portions in it, a greater area with which to transfer energy to the mediating solution because energy may also be transferred through the side walls of the recess portions. A greater area gives a good starting point for utilizing a phase change of the substance outside the pipes. The substance outside the pipe may freeze or melt, i.e. turn from liquid into solid and vice versa. Further, the recess portions allow the pipe to be bent without making the shape of the pipe disadvantageous with regard to the functioning of the pipe. The pipe can be bent more easily than a coaxial pipe with no recess portions at the outer periphery. The pipe is preferably manufactured on a coil in connection with the manufacture, whereby it is still warm and bends more easily. Heating makes the unbending of the pipe from the coil easier. The pipe may be heated by, for example, conveying warm liquid into both pipe portions, whereby the bending becomes easier. Thanks to the recess portions, it is also possible to heat the inner pipe with heating external to the pipe. In accordance with yet one embodiment of the invention, the pipe comprises an outer pipe, inside which an inner pipe is arrangeable. The outer surface of the inner pipe is arranged to be separate from the inner surface of the outer pipe by means of recess portions arranged in the outer pipe. The recess portions may be shapings of the outer pipe that align the inner pipe to the centre of the outer pipe. Furthermore, the recess portions allow the pipe to be bent without making the shape of the pipe disadvantageous with regard to the functioning of the pipe. The end of the pipe is arranged to receive the end section closing the end of the outer pipe in such a way that the mediating fluid conveyed in the pipe can, depending on the flowing direction, move at the end from the inner pipe to the outer pipe or vice versa to implement a thermal collection circuit. Closing the pipe may be implemented in various ways, depending on the boring equipment and manners. It is essential, however, that the end section closes only the end of the outer pipe, whereby the solution can move from one pipe to another. Transfer of the mediating fluid can be facilitated for instance with end section shaping which guides the flow from the inner pipe outwards or vice versa.

The material of the pipe is polyethylene, for example. The diameter of the outer pipe may be for instance 100 mm, and the diameter of the inner pipe may be for instance 40 mm. In this case, the outer pipe provides an outer periphery greater than the inner pipe and, thanks to the recess portions in it, a greater area, with which energy is transferred to the mediating solution.

The volume between the inner surface of the outer pipe and the outer surface of the inner pipe in relation to the volume of the inner pipe can be increased by varying the ratio of the pipe diameters and the number and shape of recess portions. The number of elongated recess portions is preferably at least three, whereby an inner one can be concentrically positioned inside an outer one. The recess portions of the outer pipe may also be implemented in a thread-like manner, whereby the flow channels formed between the recess portions become longer than the flow channels of straight recess portions. Centring an inner pipe in an outer pipe can be implemented with a smaller number of recess portions when the recess portions are in the pipe in a thread-like manner. Centring an inner pipe may even be implemented with one recess portion having fine threading. Also a thread-like solution can be implemented as both a one-part and a two-part pipe structure in such a way that bending of the pipe is facilitated by recess portions.

It is to be noted that the materials and diameters of pipes may vary. The inner pipe may also be insulated to reduce heat transfer between the inner and outer pipe (two-part structure) or between outer pipe portions (one-part structure). However, the area difference between the outer surface of the inner pipe and the outer surface of the outer pipe is great, whereby insulation is not necessary for the functioning of the pipe according to the invention. The inner pipe may, nevertheless, be insulated if it is desirable to reduce heat transfer between the pipes even further. Insulation of the inner pipe may be implemented in various ways, depending on the manufacturing technique of the pipes. Instead of or in addition to separate insulation material, the thickness, material etc. of the inner pipe may be varied. For example, the inner pipe may be made thicker or provided with two walls, whereby the inner pipe has better insulation properties than the outer pipe in such a way that there is less transfer of heat energy between the mediating fluids of the pipes than between the mediating fluid in the outer pipe and the ground or water surrounding it.

The inner pipe may be insulated only at the start end, whereby the flow rate at the final end increases at that portion of the outer pipe. Thus, most of the energy transfer is performed where it is most efficient. Insulation of the start end can thus be implemented in connection with the installation, for example by pushing another pipe onto the inner pipe.

The most usual additives to be added into the mediating fluid include alcohol or potassium formiate. The primary task of an additive is to lower the freezing point. The new method enabled by a pipe according to the invention allows the use of a more dilute solution with regard to its alcohol proof because colder mediating fluid is conveyed in the inner pipe, which is surrounded by the mediating fluid of the outer pipe, already warmed up. Thus, the invention even allows the use of water with no additives as the mediating fluid. When the pipe end is positioned at a depth lower than the start level, there prevails a higher temperature at the lower depth than at the start level. Hereby, the difference between the temperature of the soil at the pipe end and the temperature of the mediating fluid of the inner pipe is the greatest possible. A great temperature difference accelerates the heat transfer to the solution conveyed along the outer pipe. The mediating fluid warmed up in the outer pipe surrounds the mediating fluid conveyed in the inner pipe and prevents it from freezing.

### BRIEF DESCRIPTION OF THE FIGURES

The invention will now be described in more detail in connection with preferred embodiments, referring to the attached drawings, of which:
Figure 1 shows an embodiment of the system according to the invention;
Figure 2 shows a second embodiment of the system according to the invention;
Figure 3 shows a third embodiment of the system according to the invention;
Figure 4 shows a fourth embodiment of the system according to the invention;
Figure 5 shows a fifth embodiment of the system according to the invention;
Figure 6 shows a sixth embodiment of the system according to the invention;
Figure 7 shows an end view of an example of a pipe not covered by the claims;
Figure 8 shows an end view of the pipe of Figure 7, having an inner pipe positioned in it;
Figure 9 shows an end view of a second example of a pipe not covered by the claims;
Figure 10 shows an end view of the pipe of Figure 9, having an inner pipe positioned in it;
Figure 11 shows a front view of the pipe of Figure 9 in the horizontal direction;
Figure 12 shows an end view of a third example of a pipe not covered by the claims;
Figure 13 shows an end view of a pipe according to Figure 12, having an inner pipe positioned in it;
Figure 14 shows an end view of a fourth example of a pipe not covered by the claims;
Figure 15 shows an end view of the pipe of Figure 14, having an inner pipe positioned in it.
Figure 16 shows one embodiment of the pipe according to the invention, seen directly from one side;
Figure 17 is a principled view in which the connection piece is attached to the pipe of Figure 16;
Figure 18 is a principled view in which the connection piece is attached to the pipe of Figure 16;
Figure 19 shows an end view of an embodiment according to the invention;
Figure 20 shows an end view of a second embodiment of the pipe according to the invention;
Figure 21 shows an end view of a third embodiment of the pipe according to the invention;
Figure 22 shows an end view of a fourth embodiment of the pipe according to the invention.

### DETAILED DESCRIPTION OF THE INVENTION

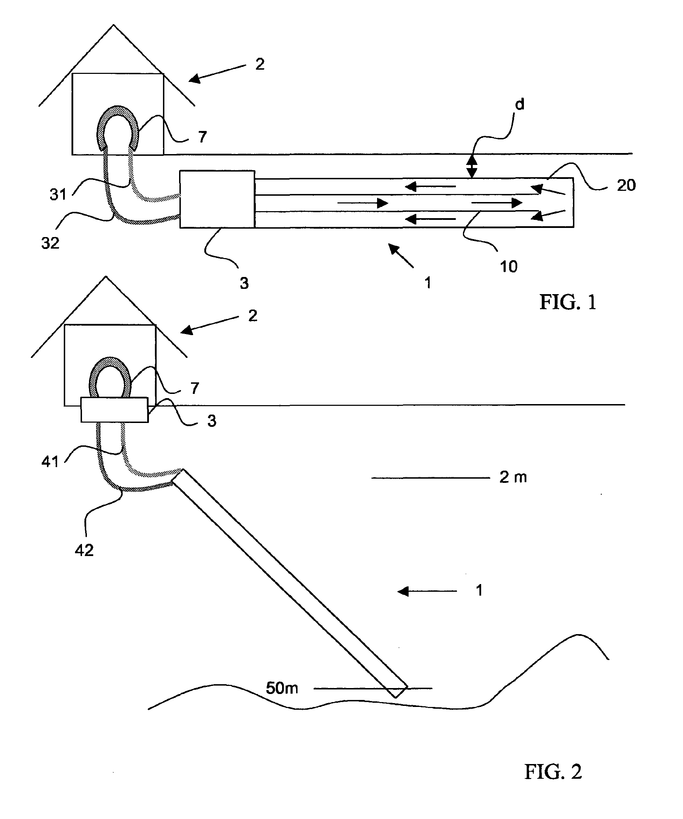

Referring to Figure 1, which shows an embodiment of the system according to the invention, where a pipe 1 is positioned horizontally below the ground surface. The pipe is at a depth d, which may be 1.2 to 2 m, for example. A terminal 3 utilizes low energy accumulated in the pipe system 1 and transfers it to a house 2 with a transfer pipe 31, in which it circulates through a heating circuit 7 and returns along a transfer pipe 32 back to the collection pipe system. The pipe 1 is here connected directly to a terminal 3. The terminal 3 may be a ground heat pump, for example. The figure shows a principled view of the pipe 1, in which the cooled mediating fluid is transferred along an inner pipe 10 having a smaller diameter away from the terminal. The mediating medium moves at the outer end of the pipe to an outer pipe 20, the diameter of which is greater than the diameter of the inner pipe 10.

Figure 2 shows a second embodiment of the system according to the invention, in which the pipe 1 of Figure 1 is positioned obliquely downwards. The pipe 1 is here separate from the terminal 3. Thus, both the pipe 1 and the terminal 3 can be positioned at suitable locations. The pipe 1 is connected to the terminal 3 with transfer pipes 41 and 42. In the figure the start end of the pipe 1 is at a depth of two meters, and the outer end is in the vicinity of the rock at a depth of 50 meters. The difference between the temperatures at the depth of the start end and at the depth of the final end may be several degrees. The inclination of the pipe can be varied in accordance with the depth of the rock. It is to be noted that the pipe 1 according to the invention can also be positioned in a hole bored in rock, and in a hole bored in the ground and partly in rock.

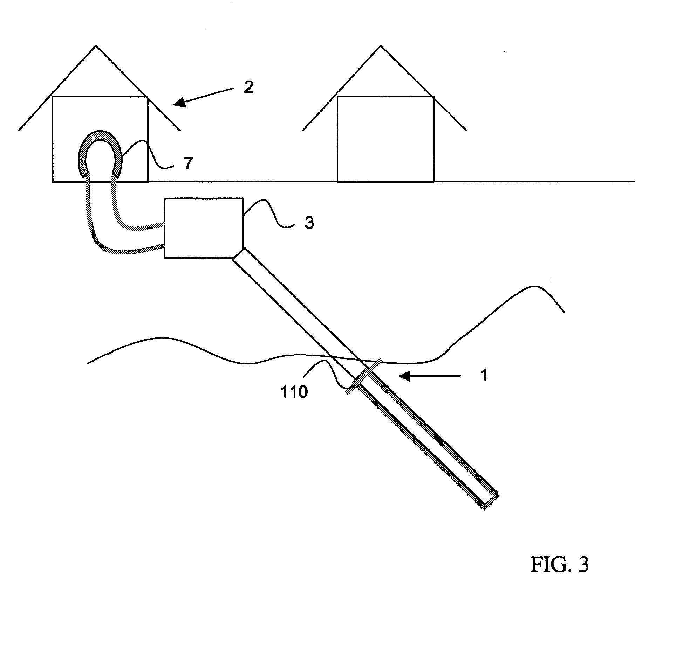

Figure 3 shows a fifth embodiment of the system according to the invention, in which the pipe 1 is positioned obliquely downwards under another building 2. The pipe 1 is positioned in a hole bored with a ground auger partly in the ground and partly in rock. In connection with the pipe 1, a separating part 110, such as a seal or the like, that separates the rock and the ground is positioned to prevent the ground from mixing with groundwater. In this way, low energy provided by both the ground and rock can be utilized, for example in the case of relatively thick soil.

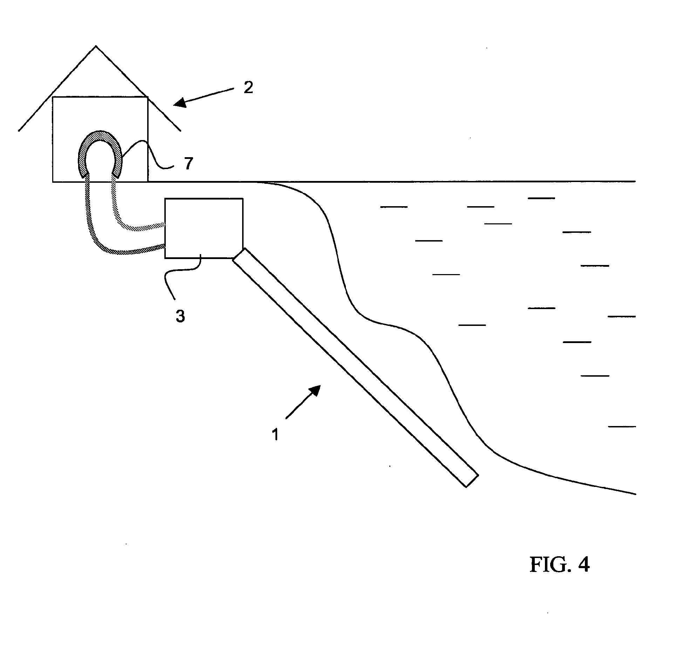

Figure 4 shows a sixth embodiment of the system according to the invention, in which the pipe 1 is positioned under a waterway in a sediment layer, from which it is advantageous to receive low energy. The pipe 1 is thus, over its whole length, protected under the bottom. Naturally, the pipe 1 according to the invention can also be positioned in a waterway in a conventional manner with weights.

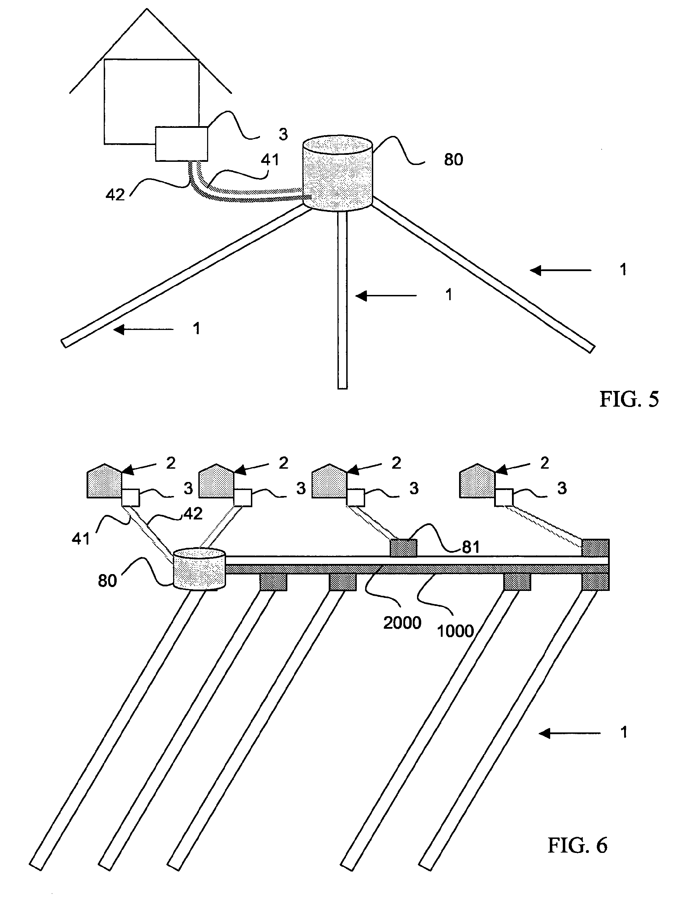

Figure 5 shows a third embodiment of the system according to the invention, in which there are three pipes 1 connected to the terminal. The pipes 1 are joined in a distribution tank 80, from where they are connected to the terminal 3 via transfer pipes 41 and 42. The number, length and inclination of the pipes 1 can vary according to the energy requirement and/or the soil.

Figure 6 shows a fourth embodiment of the system according to the invention, in which several houses 2 or real estates are connected to the system. The pipes 1 are connected to the terminals 3 via a main pipe system. The size of the main pipe system 1000, 2000 may vary according to the pressure drag. The pipes 1 are connected to the main pipe system 1000, 2000 with suitable connecting means 81 or via a distribution tank 80. The mediating fluid returns to the pipe system 1 via distribution tanks 80 or direct connecting means.

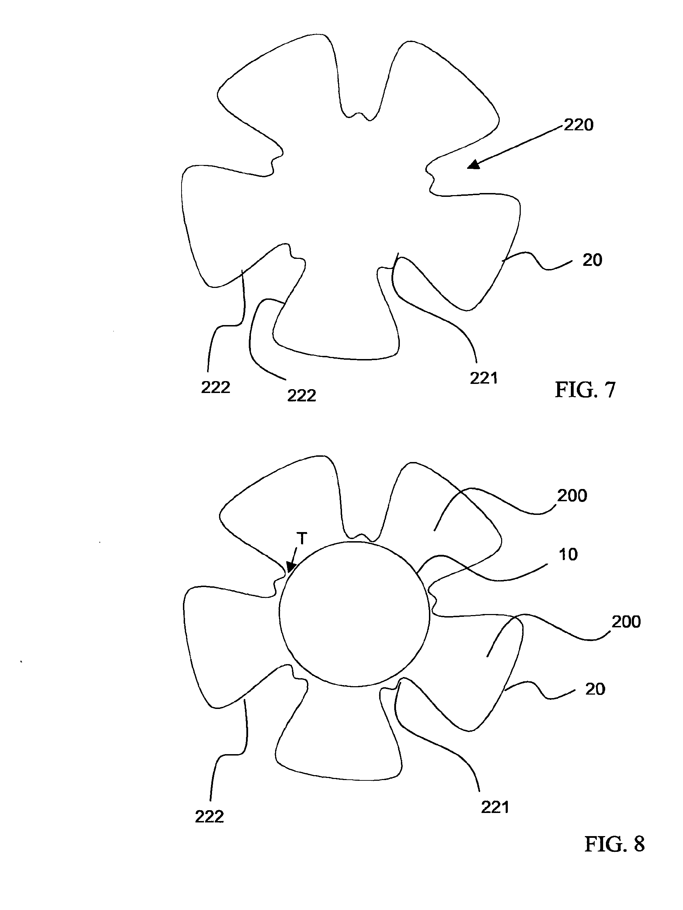

Figure 7 shows an end view of an example of a pipe not covered by the claims, having five recess portions 220. A recess portion has two side walls 222 and a locating wall 221 forming the bottom of the recess.

Figure 8 shows the pipe 20 of Figure 7, in which the inner pipe 10 is positioned. The locating walls 221 become positioned around the inner pipe 10, aligning it approximately to the centre of the outer pipe 20. Between the locating walls 221 and the inner pipe, there is a small clearance T to facilitate the installing of the inner pipe 10 into the outer pipe. The inner pipe 10 forms one flow channel, and the spaces between the recesses of the outer pipe 20 form five outer pipe portions 200, i.e. flow channels.

After the installation, this clearance T may disappear due to the outer pipe being pressed inwards. The pipe system according to the invention thus provides a uniform pipe structure, in which the inner pipe 10 also functions as a structure making the outer pipe 20 more solid. Thus, the pipe 20 cannot completely collapse by the the effect of external pressure.

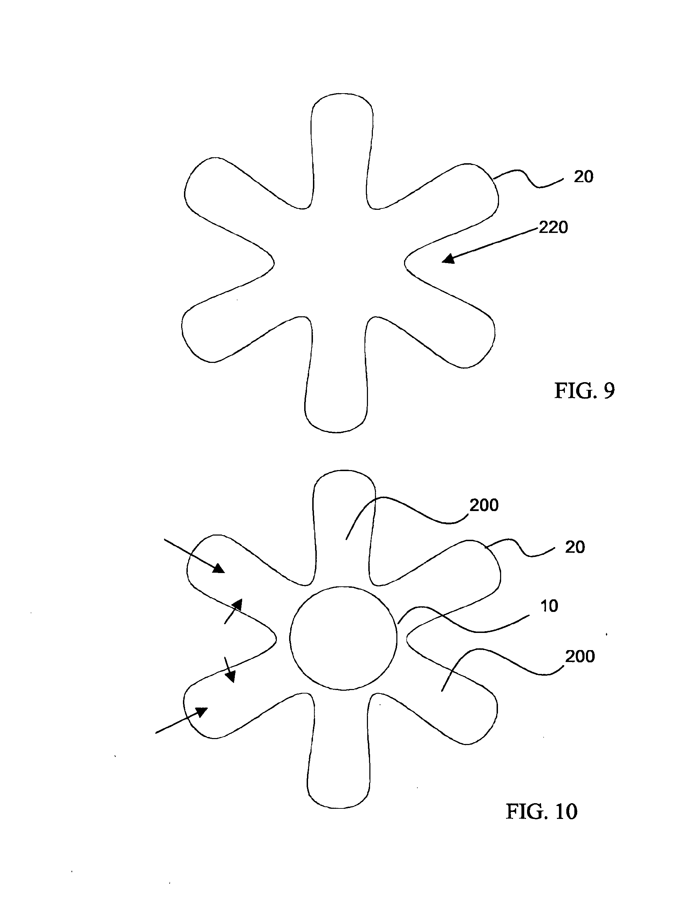

Figure 9 shows an end view of a second example of a pipe not covered by the claims, in which the number of recesses 220 is six.

Figure 10 shows the pipe 20 of Figure 9, in which the inner pipe 10 is positioned. The inner pipe forms one flow channel, and the speces between the recesses of the outer pipe 20 form six outer pipe portions 200, i.e. flow channels.

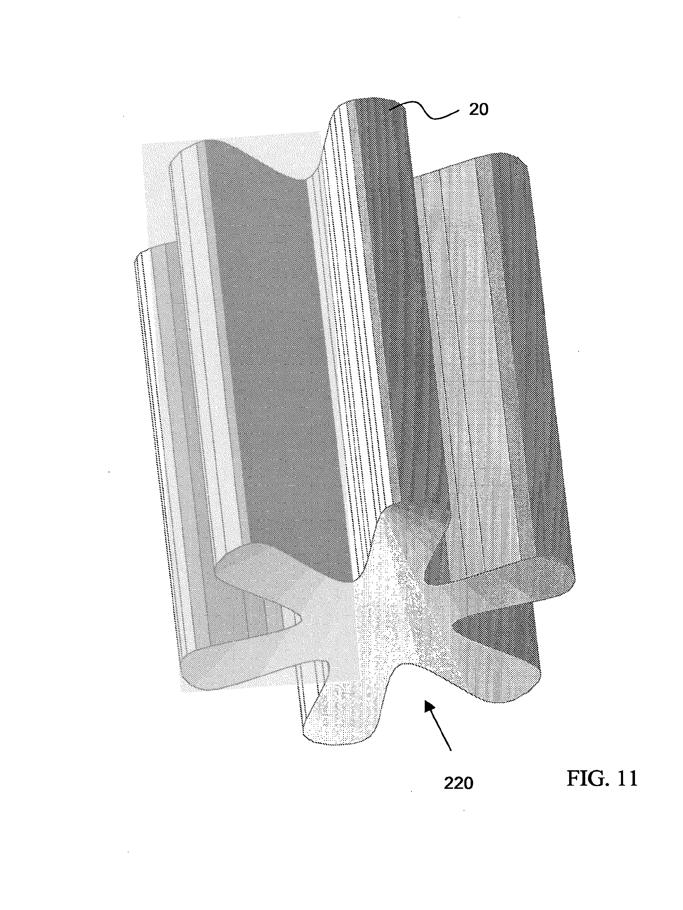

Figure 11 shows the pipe of Figure 9, in which the recesses 220 are in the longitudinal direction of the pipe 20.

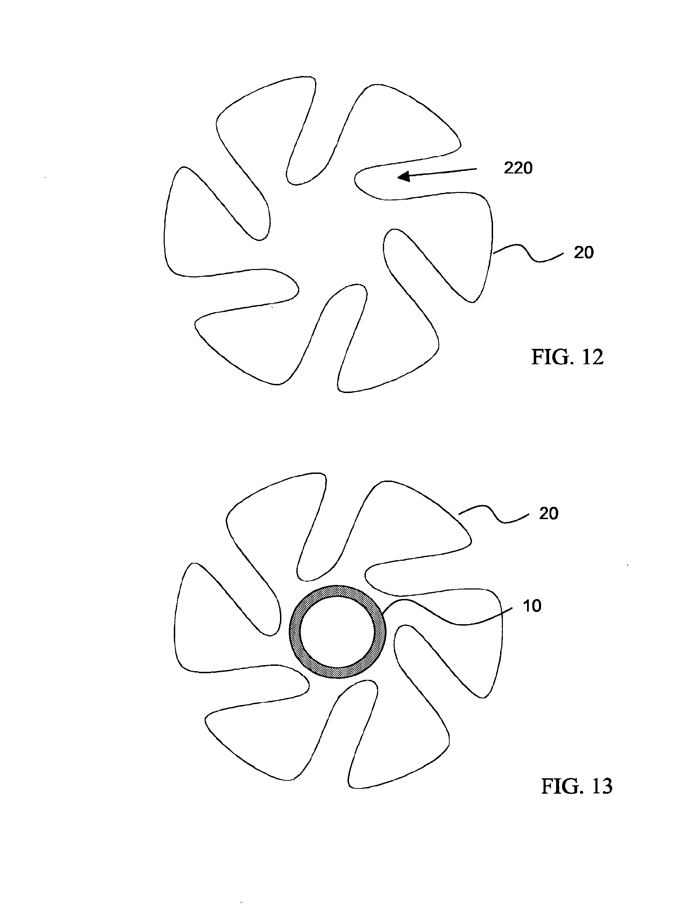

Figure 12 shows an end view of a third example of a pipe not covered by the claims, in which the number of recesses 220 is six.

Figure 13 shows the pipe 20 according to Figure 12, in which the inner pipe 10 is positioned. Here, the inner pipe 10 has insulation properties different from those of the outer pipe 20. The inner pipe 10 may be provided with insulating material, but this is not necessary with regard to the the functioning of the invention. The special properties of the inner pipe 10 may, however, be changed according to the manufacturing technique. The thickness and structure of the inner pipe 10 may be changed if the pipes are manufactured of the same material. Thus, the amount of heat energy transferred between the pipes can be reduced.

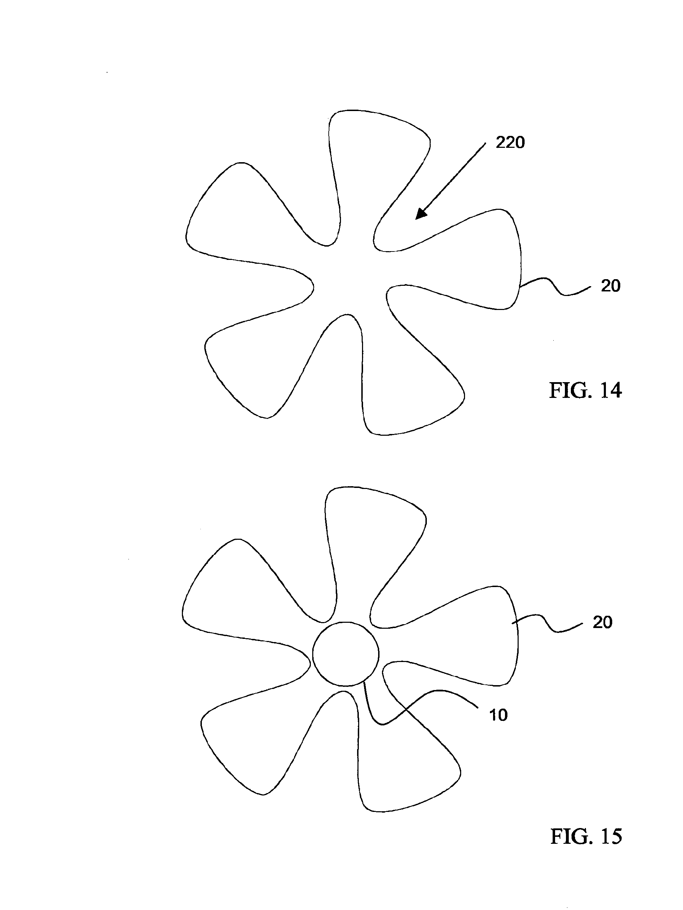

Figure 14 shows an end view of a fourth example of a pipe not covered by the claims, in which the number of recesses 220 is six. Figure 15 shows the pipe 20 according to Figure 14, in which the inner pipe 10 is positioned.

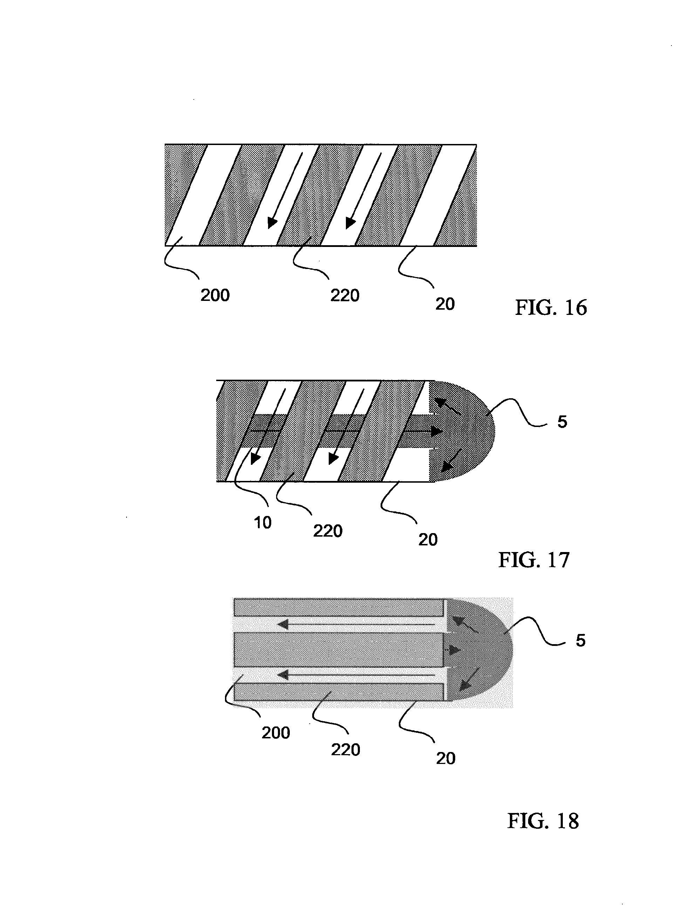

Figure 16 shows one embodiment of the pipe according to the invention, in which the recesses 220 are in the longitudinal direction of the pipe 20 in a thread-like manner. Thus, the travel distance of the fluid flowing in the outer pipe 20 is increased depending on the number of threads. In the case of a fine thread, the fluid can be conveyed along one or two flow channels 200 to the other end of the pipe.

Figure 17 is a partial view of an embodiment of an end part 5 of the pipe according to the invention, in which the flow is from the inner pipe 10 to the outer pipe 20 having the recess portions 220 according to the invention. The arrows indicate the flowing direction. It is to be noted that the flowing direction can also be implemented reversely. The end part can be attached to the pipe in suitable ways, for example by welding.

Figure 18 is a partial view of an embodiment of the end part 5 of the pipe according to the invention, in which the flow is from the inner pipe to the outer pipe 20 having the recess portions 220 according to the invention. The recess portions 220 are here in the longitudinal direction of the pipe. The arrows indicate the flowing direction in the flow channels 200. It is to be noted that the flowing direction can also be implemented reversely.

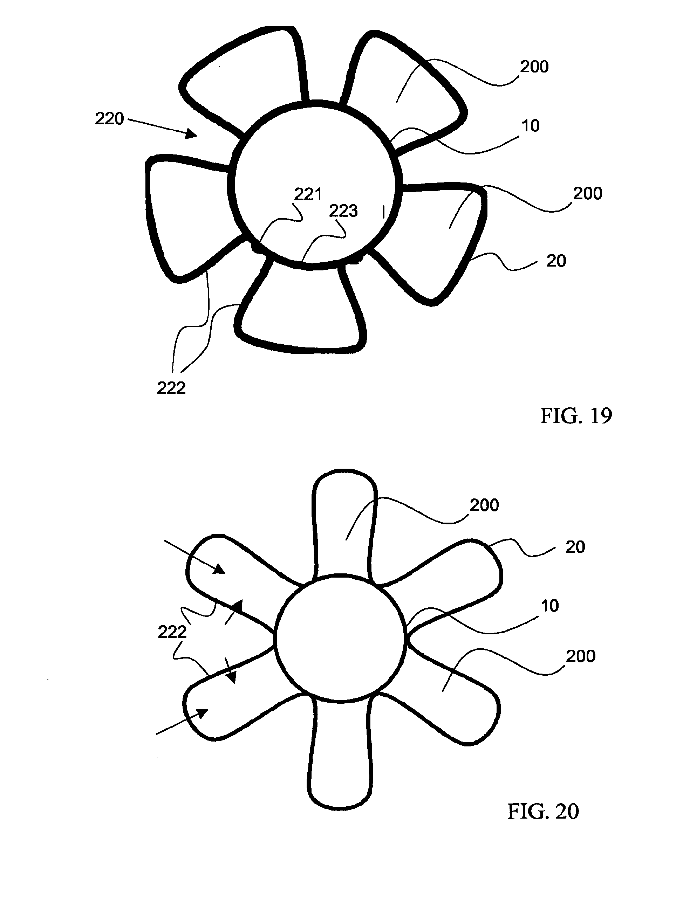

Figure 19 indicates an embodiment of the pipe according to the invention, in which there are five recess portions 220. In each recess portion, there are two side walls 222 and locating walls 221 forming the bottom of the recess. The locating walls 221 are joined to each other via walls 223, this forming the inner pipe 10. In other words, the outer pipe portions 200, i.e. the flow channels, are formed around the inner pipe 10. The inner pipe 10 forms one flow channel, and the spaces formed between the recess portions 220 of the outer pipe 20 form five outer flow channels around the inner pipe 10.

Figure 20 shows an embodiment of the pipe according to the invention, in which the number of recesses 220 is six. The inner pipe 10 forms one flow channel, and the spaces formed between the recess portions 220 of the outer pipe 20 form six outer flow channels. The arrows in the figure indicate the transfer of energy in the outer pipe portion 200. It can be seen from the figure that energy is transferred between the mediating medium conveyed in the pipe portion 200 and the substance surrounding the pipe both from the outer periphery of the pipe 20 and through the walls 222 of the recess portion 220 positioned closer to the axis of revolution of the pipe.

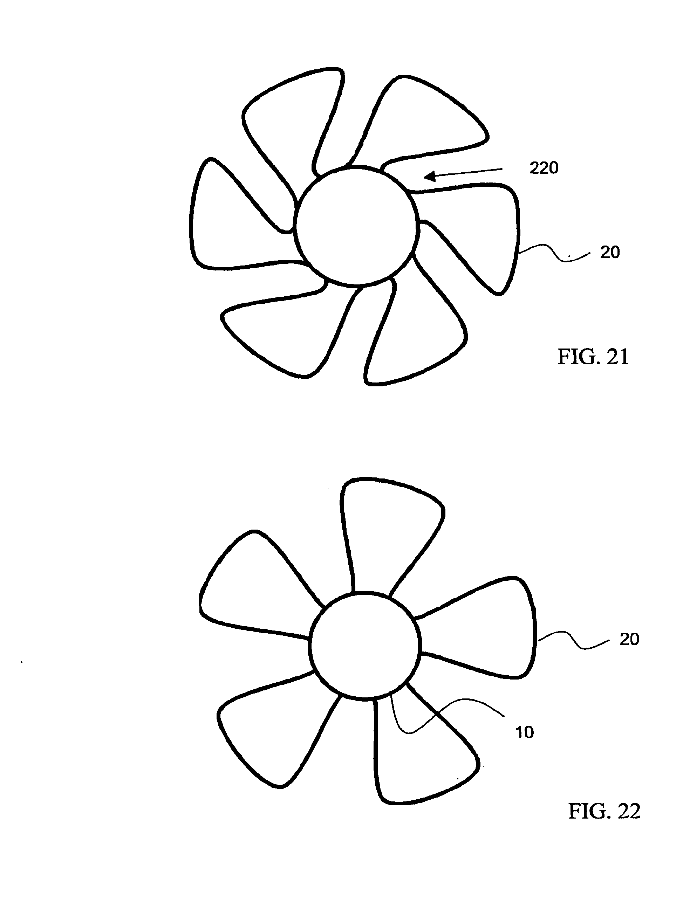

Figure 21 shows an embodiment of the pipe according to the invention, in which the number of recess portions 220 is six.

Figure 22 shows an embodiment of the pipe according to the invention, in which the number of recesses 220 is five. In the structures of Figures 19, 21 and 22 the outer pipe portions 200 are formed in the inner pipe 10 in such a way that they are joined to each other only over a narrow portion. Thus, the bending of the pipe is further facilitated, and the amount of heat energy transferred between the inner pipe 10 and the outer pipe portions is reduced because there is less common space.

In accordance with Figures 19 to 22, it can be noted that the shape and number of the outer pipe portions 200 may vary. Further, the inner pipe 10 may have insulation properties different from those of the outer pipe portions 200. The inner pipe 10 may be provided with insulating material, or the thickness or structure of the inner pipe 10 may be changed. Hence, the amount of heat energy transferred between the pipes can be reduced, but this is not necessary with regard to the functioning of the invention. For example in the solution according to Figures 19 to 22, it is possible for energy to be transferred between the mediating medium conveyed in the inner pipe and the substance surrounding the pipe because the recess portions extend to the outer periphery of the inner pipe 10. It is obvious to a person skilled in the art that as the technology advances, the basic idea of the invention can be implemented in many different ways. The invention and its embodiments are thus not confined to the above examples but may vary within the scope of the claims.

## Claims

1. A pipe for utilizing low energy of the ground, rock or water; comprising recess portions (220) extending inwards at the outer periphery of the pipe (20),
the recess portion (220) being open over the portion of the outer periphery in such a way that heat energy can be transferred in the pipe between a mediating medium conveyed in the pipe and the substance surrounding the pipe both from the outer periphery of the pipe (20) and through side walls (222) and a locating wall (221) forming the bottom of the recess portion (220), **characterized in that** the pipe (20) comprises at least three recess portions (220), between which there are walls (223) forming together with the locating walls (221) the inner pipe (10) so that outer pipe portions (200) are formed around the inner pipe (10), the inner pipe (10) forming one flow channel and the spaces formed between the recess portions (220) of the outer pipe form outer flow channels around the inner pipe (10).

2. A pipe according to claim 1, **characterized in that** the pipe (20) comprises an inner pipe (10) and outer pipe portions (200) separated from each other by recess portions.

3. A pipe according to any one of the preceding claims, **characterized in that** the recess portion (220) in the pipe (20) is in the thread-like manner in the longitudinal direction of the pipe.

4. A pipe according to any one of the preceding claims, **characterized in that** the wall thickness of the recess portion (220) is smaller than the wall thickness of the outer portion of the pipe.

5. A pipe according to any one of the preceding claims, **characterized in that** the recess portion (220) in the pipe (20) is substantially of the shape of the letter U.

6. A system for utilizing low energy of the ground, rock or water; comprising
- a terminal (3), and
- a ground circuit, having a pipe system with circulating mediating fluid to which low energy is bound, this low energy being utilized by means of a terminal (3), wherein the ground circuit is implemented with an inner pipe (10) and an outer pipe (20) surrounding it in such a way that the outer end of the outer pipe (20) is closed, whereby the solution can, depending on the flowing direction, move at the end of the pipe from the inner pipe (10) to the outer pipe (20) or vice versa, wherein the outer periphery of the outer pipe (20) comprises recess portions (220) extending inwards, the recess portion (220) being open over the portion of the outer periphery in such a way that heat energy can be transferred in the pipe between a mediating medium conveyed in the pipe and the substance surrounding the pipe both from the outer periphery of the pipe (20) and through side walls (222), and a locating wall (221) forming the bottom of the recess portion (220), **characterized in that** the pipe (20) comprises at least three recess portions (220), between which there are walls (223) forming together with the locating walls (221)the inner pipe (10) so that outer pipe portions (200) are formed around the inner pipe (10), the inner pipe (10) forming one flow channel and the spaces formed between the recess portions (220) of the outer pipe form outer flow channels around the inner pipe (10).

7. A system according to claim 6, **characterized in that** the pipe (20) comprises an inner pipe (10) and outer pipe portions (200) separated from each other by recess portions.

8. A system according to any one of the preceding claims 6 to 7, **characterized in that** the pipe having the inner pipe (10) and outer pipe portions (200) is directed downwards from the horizontal plane.

9. A system according to any one of the preceding claims 6 to 8, **characterized in that** the ground circuit further comprises a main pipe system connected to the terminal, there being two or more said pipes having the inner pipe (10) and outer pipe portions (200) joined to the main pipe system.

10. A system according to claim 9, **characterized in that** the system further comprises main pipe systems (1000, 2000), to which the inner pipes (10) and outer pipe portions (200) are joined via distribution tanks (80) and connecting means (81).

## Patentansprüche

1. Rohr zum Verwenden von niedriger Energie aus Erdboden, Gestein oder Gewässer, das Vertiefungsabschnitte (220) umfasst, die sich an der Außenperipherie des Rohrs (20) nach innen erstrecken,
wobei der Vertiefungsabschnitt (220) über dem Abschnitt der Außenperipherie derart geöffnet ist, dass Wärmeenergie in dem Rohr zwischen einem Vermittlermedium im Rohr und der das Rohr umgebenden Substanz über die Außenperipherie des Rohrs (20) sowie durch Seitenwände (222) und eine Lokalisierungswand (221), welche den Boden des Vertiefungsabschnitts (220) ausmacht, hindurch übertragen werden kann, **dadurch gekennzeichnet, dass** das Rohr (20) wenigstens drei Vertiefungsabschnitte (220) umfasst, zwischen denen Wände (223) angeordnet sind, die gemeinsam mit den Lokalisierungswänden (221) das innere Rohr (10) derart ausbilden, dass die äußeren Rohrabschnitte (200) um das innere Rohr (10) herum ausgebildet sind, wobei das innere Rohr (10) einen Strömungskanal ausbildet und die Räume zwischen den Vertiefungsabschnitten (220) des äußeren Rohrs äußere Strömungskanäle um das innere Rohr (10) herum ausbilden.

2. Rohr nach Anspruch 1, **dadurch gekennzeichnet, dass** das Rohr (20) ein inneres Rohr (10) und äußere Rohrabschnitte (200) umfasst, die über Vertiefungsabschnitte voneinander getrennt sind.

3. Rohr nach einem der vorhergehenden Ansprüche, **dadurch gekennzeichnet, dass** der Vertiefungsabschnitt (220) im Rohr (20) gewindeförmig um die Längsachse des Rohrs angeordnet ist.

4. Rohr nach einem der vorhergehenden Ansprüche, **dadurch gekennzeichnet, dass** die Wandstärke im Vertiefungsabschnitt (220) geringer ist als die Wandstärke im äußeren Abschnitt des Rohrs.

5. Rohr nach einem der vorhergehenden Ansprüche, **dadurch gekennzeichnet, dass** der Vertiefungsabschnitt (220) des Rohrs (20) im Wesentlichen der Form des Buchstabens U entspricht.

6. System zum Verwenden von niedriger Energie aus Erdboden, Gestein oder Gewässer, Folgendes umfassend:
- einen Terminal (3) und
- einen Bodenkreislauf, welcher ein Rohrsystem mit einem darin fließenden Vermittlerfluid aufweist, in welchem niedrige Energie gebunden wird, wobei diese niedrige Energie durch einen Terminal (3) verwendet wird, wobei der Bodenkreislauf mit einem inneren Rohr (10) und einem äußeren Rohr (20) implementiert ist, welches dieses derart umgibt, dass das äußere Ende des äußeren Rohrs (20) geschlossen ist, wodurch eine Lösung je nach Fließrichtung am Ende des Rohrs aus dem inneren Rohr (10) in das äußere Rohr (20) fließen kann oder andersherum, wobei die Außenperipherie des äußeren Rohrs (20) Vertiefungsabschnitte (220) umfasst, die sich nach innen erstrecken, wobei der Vertiefungsabschnitt (220) über dem Abschnitt der Außenperipherie derart geöffnet ist, dass Wärmeenergie in dem Rohr zwischen einem Vermittlermedium im Rohr und der das Rohr umgebenden Substanz über die Außenperipherie des Rohrs (20) sowie durch Seitenwände (222) und eine Lokalisierungswand (221), welche den Boden des Vertiefungsabschnitts (220) ausmacht, hindurch übertragen werden kann, **dadurch gekennzeichnet, dass** das Rohr (20) wenigstens drei Vertiefungsabschnitte (220) umfasst, zwischen denen Wände (223) angeordnet sind, die gemeinsam mit den Lokalisierungswänden (221) das innere Rohr (10) derart ausbilden, dass die äußeren Rohrabschnitte (200) um das innere Rohr (10) herum ausgebildet sind, wobei das innere Rohr (10) einen Strömungskanal ausbildet und die Räume zwischen den Vertiefungsabschnitten (220) des äußeren Rohrs äußere Strömungskanäle um das innere Rohr (10) herum ausbilden.

7. System nach Anspruch 6, **dadurch gekennzeichnet, dass** das Rohr (20) ein inneres Rohr (10) und äußere Rohrabschnitte (200) umfasst, die über Vertiefungsabschnitte voneinander getrennt sind.

8. System nach einem der vorhergehenden Ansprüche 6 bis 7, **dadurch gekennzeichnet, dass** das Rohr mit dem inneren Rohr (10) und den äußeren Rohrabschnitten (200) von der horizontalen Ebene aus nach unten gerichtet ist.

9. System nach einem der vorhergehenden Ansprüche 6 bis 8, **dadurch gekennzeichnet, dass** der Bodenkreislauf ferner ein Hauptrohrsystem umfasst, das mit dem Terminal verbunden ist, wobei zwei oder mehr der Rohre mit innerem Rohr (10) und äußeren Rohrabschnitten (200) an das Hauptrohrsystem angeschlossen sind.

10. System nach Anspruch 9, **dadurch gekennzeichnet, dass** das System ferner Hauptrohrsysteme (1000, 2000) umfasst, mit denen die inneren Rohre (10) und die äußeren Rohrabschnitte (200) über Verteilerbehälter (80) und Verbindungsmittel (81) verbunden sind.

## Revendications

1. Une conduite pour utiliser la faible énergie du sol, des roches ou de l'eau, comprenant des parties en retrait (220) s'étendant vers l'intérieur à la périphérie externe de la conduite (20),
la partie en retrait (220) étant ouverte sur la partie de la périphérie externe d'une telle façon que de l'énergie calorifique peut être transférée dans la conduite entre un milieu intermédiaire transporté dans la conduite et la substance entourant la conduite tant depuis la périphérie externe de la conduite (20) qu'à travers des parois latérales (222) et une paroi de positionnement (221) formant le fond de la partie en retrait (220), **caractérisée en ce que** la conduite (20) comprend au moins trois parties en retrait (220), entre lesquelles il y a des parois (223) formant avec les parois de positionnement (221) la conduite interne (10) de sorte que des parties de conduite externe (200) sont formées autour de la conduite interne (10), la conduite interne (10) formant un canal d'écoulement et les espaces formés entre les parties en retrait (220) de la conduite externe forment des canaux d'écoulement externes autour de la conduite interne (10).

2. Une conduite selon la revendication 1, **caractérisée en ce que** la conduite (20) comprend une conduite interne (10) et des parties de conduite externe (200) séparées les unes des autres par des parties en retrait.

3. Une conduite selon n'importe laquelle des revendications précédentes, **caractérisée en ce que** la partie en retrait (220) dans la conduite (20) est filiforme dans la direction longitudinale de la conduite.

4. Une conduite selon n'importe laquelle des revendications précédentes, **caractérisée en ce que** l'épaisseur de paroi de la partie en retrait (220) est plus petite que l'épaisseur de paroi de la partie externe de la conduite.

5. Une conduite selon n'importe laquelle des revendications précédentes, **caractérisée en ce que** la partie en retrait (220) dans la conduite (20) est sensiblement en forme de U.

6. Un système pour utiliser la faible énergie du sol, des roches ou de l'eau, comprenant
- un terminal (3), et
- un circuit de sol, ayant un système de conduite avec un fluide en circulation servant d'intermédiaire auquel une faible énergie est liée, cette faible énergie étant utilisée au moyen d'un terminal (3), dans lequel le circuit de sol est mis en oeuvre avec une conduite interne (10) et une conduite externe (20) l'entourant d'une telle façon que l'extrémité externe de la conduite externe (20) est fermée, de sorte que la solution peut, en fonction du sens d'écoulement, se déplacer au niveau de l'extrémité de la conduite depuis la conduite interne (10) vers la conduite externe (20) ou vice versa, dans lequel la périphérie externe de la conduite externe (20) comprend des parties en retrait (220) s'étendant vers l'intérieur, la partie en retrait (220) étant ouverte sur la partie de la périphérie externe d'une telle façon que l'énergie calorifique peut être transférée dans la conduite entre un milieu intermédiaire transporté dans la conduite et la substance entourant la conduite tant depuis la périphérie externe de la conduite (20) qu'à travers des parois latérales (222), et une paroi de positionnement (221) formant le fond de la partie en retrait (220), **caractérisée en ce que** la conduite (20) comprend au moins trois parties en retrait (220), entre lesquelles il y a des parois (223) formant avec les parois de positionnement (221) la conduite interne (10) de sorte que des parties de conduite externe (200) sont formées autour de la conduite interne (10), la conduite interne (10) formant un canal d'écoulement et les espaces formés entre les parties en retrait (220) de la conduite externe forment des canaux d'écoulement externes autour de la conduite interne (10).

7. Un système selon la revendication 6, **caractérisé en ce que** la conduite (20) comprend une conduite interne (10) et des parties de conduite externe (200) séparées les unes des autres par des parties en retrait.

8. Un système selon n'importe laquelle des revendications précédentes 6 à 7, **caractérisé en ce que** la conduite ayant la conduite interne (10) et des parties de conduite externe (200) est dirigée vers le bas à partir du plan horizontal.

9. Un système selon n'importe laquelle des revendications précédentes 6 à 8, **caractérisé en ce que** le circuit de sol comprend en outre un système principal de conduite relié au terminal, deux ou plus desdites conduites étant prévues avec la conduite interne (10) et des parties de conduite externe (200) jointes au système principal de conduite.

10. Un système selon la revendication 9, **caractérisé en ce que** le système comprend en outre des systèmes principaux de conduite (1000, 2000), auxquels les conduites internes (10) et des parties de conduite externe (200) sont jointes via des réservoirs de distribution (80) et des moyens de connexion (81).
